# EUROPEAN PATENT SPECIFICATION

(11) **EP 2 113 528 B1**
(45) Date of publication and mention of the grant of the patent: **19.06.2013**
(21) Application number: 09157908.6
(22) Date of filing: 15.04.2009
(51) Int. Cl.: C08K 3/22, C01G 9/02

(54) **Ultraviolet-shielding transparent resin molding and manufacturing method of the same**
Ultraviolettlicht abschirmendes Formteil aus transparentem Kunststoff und Verfahren zu dessen Herstellung
Objet moulé de résine transparente ayant protection aux ultraviolets et son procédé de fabrication

(30) Priority: 30.04.2008 JP 2008119124
(43) Date of publication of application: 04.11.2009
(73) Proprietor: Sumitomo Metal Mining Co., Ltd., Tokyo 105-8716 (JP)
(72) Inventor: Takeshi, Chonan, Ichikawa-shi Chiba 272-0835 (JP); Kobayashi, Hiroshi, Ichikawa-shi Chiba 272-0835 (JP)
(74) Representative: Betten & Resch

(56) References cited:
- WO-A-2007/059841
- US-A- 5 527 519
- DATABASE WPI Week 200623 Thomson Scientific, London, GB; AN 2006-220470 XP002549001 -& JP 2006 077075 A (SUMITOMO METAL MINING CO) 23 March 2006 (2006-03-23) -& US 2006/052486 A1 (FUJITA KENICHI [JP]) 9 March 2006 (2006-03-09)
- DATABASE WPI Week 199141 Thomson Scientific, London, GB; AN 1991-299607 XP002549002 -& JP 03 199121 A (MITSUBISHI MATERIALS CORP) 30 August 1991 (1991-08-30)

## Description

### BACKGROUND

### Technical Field

The present invention relates to an ultraviolet-shielding transparent resin molding, with zinc oxide fine particles having excellent ultraviolet-shielding characteristics, dispersed in a transparent resin, and a manufacturing method of the same.

### Description of Related Art

A transparent resin molding such as acrylic resin, polycarbonate resin, and polyester resin, is generally used as a building material used in the open air, such as a sky light, a carport, and a roof material of a dome, from its transparency and beauty of an outer appearance. However, there is a problem that ultraviolet light included in the sunlight transmits through the building material constituted of the aforementioned transparent resin, thus causing deterioration, change of color, and change of properties of an article placed in a room or in a vehicle.

Also, since the aforementioned transparent resin molding itself has a tendency of absorbing the ultraviolet light, deterioration of the molding itself occurs when exposed to the ultraviolet light for a long period of time. Thus, a thermoplastic constituting the transparent resin molding has an inferior weather resistance if compared with a material such as glass or metal, thus involving a problem that bonding of C, H, O, being a framework of the transparent resin, is destructed by irradiation of the ultraviolet light for a long time, and change of color, deterioration of mechanical strength, and generation of crack, etc, are caused thereby.

Therefore, in order to solve the above-described problem caused by the ultraviolet light, a method of blending an organic ultraviolet light absorber into the transparent thermoplastic resin has been attempted conventionally. Then, benzophenone-based, benzotriazole-based, triazine-based, and salicylate-based ultraviolet light absorbers have been used as the aforementioned organic ultraviolet light absorber.

However, such an organic ultraviolet light absorber is a substance of relatively low molecules, and therefore when a molding is made by kneading this organic ultraviolet light absorber into the transparent resin, there is a problem that the kneaded ultraviolet light absorber of low molecules is easily eluted on the surface of the molding. Further, the organic ultraviolet light absorber itself has a sanitary problem to a human body. Moreover, the organic ultraviolet light absorber has a room for improvement if an environmental problem such as an emission of dioxin is taken into consideration, because some of the organic ultraviolet light absorber has chlorine introduced into its structure.

Further, when the organic ultraviolet light absorber is melted and kneaded into the thermoplastic resin having a high melting point, such as the polycarbonate resin and the polyester resin, there is also a problem that the ultraviolet light absorber is decomposed/deteriorated by heating and its ultraviolet light absorbing capability is lowered or the change of color occurs in the resin. In addition, there is also a problem in weather resistance property of the organic ultraviolet light absorber itself, thus involving a problem that when exposed to ultraviolet light for a long time, the organic ultraviolet light absorber is deteriorated and its effect is gradually lost.

Therefore, in order to solve such problems in terms of heat resistance property, weather resistance property, and elution property, an attempt to apply an inorganic ultraviolet absorber such as titanium oxide and zinc oxide has been made, instead of the aforementioned organic ultraviolet light absorber. For example, patent document 1 proposes a polyester resin composition, with the inorganic ultraviolet light absorber such as zinc oxide, titanium oxide, cerium oxide, and iron oxide and a pigment dispersant blended into the thermoplastic polyester resin, and a molding having transparency composed of this polyester resin composition.

However, although the inorganic ultraviolet light absorber has excellent heat stability and weather resistance property, the surface of the inorganic ultraviolet light absorber has a photocatalytic activity. Therefore, when the inorganic ultraviolet absorber is melted and kneaded into the thermoplastic resin, there is a problem that decomposition/deterioration of this thermoplastic resin is accelerated, thus causing the change of color to occur in this thermoplastic resin and the mechanical characteristics to be deteriorated.

In addition, in order to maintain transparency of the thermoplastic resin, a particle size of the inorganic ultraviolet light absorber blended in this thermoplastic resin must be set to be a wavelength of a visible light or less. However, there is a problem that dispersability of the particles of the inorganic ultraviolet light absorber is lowered by interaction between particles, when melted and kneaded into the thermoplastic resin, and coagulation of particles occurs, and therefore secondary particles of several µm to several tens µm are easily generated.

Therefore, in order to solve the problem of the inorganic ultraviolet light absorber due to the aforementioned photocatalytic activity and dispersability, and suppress the elution property of a zinc ion, patent document 2 proposes aqueous slurry containing silica-coated zinc oxide fine particles with a surface coated with silica, an organic polymer composition containing silica coated zinc oxide fine particles obtained by drying this aqueous slurry and an organic polymer, and an optical functional molding formed by molding this organic polymer composition.

In addition, patent document 3 proposes the silica coated zinc oxide fine particles to which hydrophobicity is imparted by applying surface treatment to the surface of the silica coated zinc oxide fine particles by a hydrophobicity-imparting agent such as a silicon oil group, alkoxysilane group, a silane coupling agent group, and a solution of shalt of higher fatty acids; an organic polymer composition containing the silica coated zinc oxide fine particles and the thermoplastic resin; and a molding formed by molding this organic polymer composition.

The above-described problems due to the photocatalytic activity and dispersability of the inorganic ultraviolet light absorber are reduced by techniques described in the patent document 2 and the patent document 3. However, in these techniques, adjustment of the silica coated zinc oxide fine particles with the surface coated with silica is required, thereby increasing processing man-hours. Consequently, this invites a new problem that a manufacturing cost of the composition and the molding manufactured based on these technique is relatively high.

In order to solve the above-described problem, inventors of the present invention propose in patent document 4 a method of a surface treatment by at least one kind of surface treating agent selected from each kind of coupling agent having an alkoxy group or hydroxyl group and an organic functional group, without coating the surface of the inorganic ultraviolet light absorber with silica. By this method, the dispersability of the inorganic ultraviolet light absorber into the transparent resin is improved, and the photocatalytic activity of the inorganic ultraviolet light absorber and the elution property of the metal ion are suppressed, and further reduction of the manufacturing cost can be realized.
Also, patent document 5 discloses a manufacturing method of the zinc oxide fine particles with specific surface areas set at 30m²/g to 100m²/g.

(Patent document 1)
   Japanese Patent Laid Open Publication No.2000-63647
(Patent document 2)
   Japanese Patent Laid Open Publication No.2003-292818
(Patent document 3)
   Japanese Patent Laid Open Publication No.2004-59421
(Patent document 4)
   Japanese Patent Laid Open Publication No.2006-77075
(Patent document 5)
   Japanese Patent Laid Open Publication No.10-120418

However, according to an examination by the inventors of the present invention, ultraviolet light shielding characteristics at a wavelength 375nm close to a visible light are not sufficient, in the ultraviolet light shielding resin molding using the zinc oxide as the inorganic ultraviolet light absorber, and there is still a room for improvement in terms of the characteristics that both high ultraviolet light shielding and a low haze value are exhibited.
Also, according to the manufacturing method of the zinc oxide fine particles shown in the patent document 5, there is a problem that a slight amount of impurities in the zinc oxide fine particles are not completely removed, and remained in super-fine zinc oxide to be generated, thus deteriorating an ultraviolet light shielding performance of the super-fine zinc oxide particles.

In view of the above-described circumstance, the present invention is provided, and an object of the present invention is to provide the ultraviolet light shielding transparent resin molding using the inorganic ultraviolet light absorber and the manufacturing method of the same, capable of exhibiting both the high ultraviolet light shielding and the low haze value.

### SUMMARY OF THE INVENTION

In order to achieve the above-described problem, as a result of an examination by the inventors of the present invention, it is found that by dispersing zinc oxide fine particles having each specific surface area and average particle size, half value width of X-ray diffraction peak and crystallite diameter, as fine particles of an ultraviolet light shielding material, into a transparent resin, it is possible to manufacture an ultraviolet light shielding transparent resin molding with 30% or less transmittance of light having a wavelength of 375nm, 70% or more transmittance of light having a wavelength of 400nm, and 1.3% or less haze value, when a visible light transmittance is set at 70% or more. Thus, the present invention is completed.

The present invention is defined in the independent claims. The dependent claims define embodiments of the invention.
Namely, a first embodiment provides an ultraviolet light shielding transparent resin molding with zinc oxide fine particles dispersed in a transparent resin, with each specific surface area set at 25m²/g or more and 55m²/g or less, average particle size set at 19nm or more and 41nm or less, a half value of a (101) peak in X-ray diffraction measurement set at 0.5 or less, and crystallite diameter set at 15nm or more and 20nm or less, and content of the zinc oxide fine particles in the ultraviolet light shielding transparent resin molding set at 0.01 wt% to 30wt%.

A second embodiment provides the ultraviolet light shielding transparent resin molding according to the first embodiment, wherein when a visible light transmittance is set at 70% or more, a transmittance of light having a wavelength of 375nm is 30% or less, a transmittance of light having a wavelength of 400nm is 70% or more, and a haze value is 1.3% or less.

A third embodiment provides the ultraviolet light shielding transparent resin molding according to the first or second embodiment, wherein the zinc oxide fine particles contain one kind or more elements selected from Si, Al, Zr, and Ti.

A fourth embodiment provides the ultraviolet light shielding transparent resin molding according to any one of the first to third embodiments, wherein the transparent resin is at least one or more kind of resin selected from acrylic resin, polycarbonate resin, vinyl chloride resin, polystyrene resin, polyether sulfone resin, fluorinated resin, polyolefin resin, and polyester resin.

A fifth embodiment provides the ultraviolet light shielding transparent resin molding according to any one of the first to fourth embodiments, containing at least one kind or more surface treating agents selected from a silane coupling agent, a titanium coupling agent, an aluminum coupling agent, and a zirconium coupling agent, having an alkoxy group or a hydroxyl group, and an organic functional group.

A sixth embodiment provides a manufacturing method of an ultraviolet light shielding transparent resin molding, including the steps of:
melting and mixing a resin composition containing
zinc oxide fine particles obtained by dropping and stirring a solution of a zinc compound into an alkali solution to thereby obtain a precipitate, then subjecting the precipitate to decantation by pure water, and cleaning the precipitate until conductivity of a cleaning liquid after cleaning becomes 1mS/cm or less, and thereafter applying wet treatment with alcohol to the precipitate after cleaning and drying thereafter to thereby obtain a zinc oxide precursor, and applying heat treatment to this zinc oxide precursor at 350°C or more and 500°C or less in an atmosphere selected from any one of the atmospheric air, inert gas, and mixed gas of the inert gas and reductive gas to thereby obtain zinc oxide fine particles, with each specific surface area set at 25m²/g or more and 55m²/g or less, average particle size set at 19nm or more and 41nm or less, a half value width of a (101) peak in an X-ray diffraction measurement set at 0.5 or less, and a crystallite diameter set at 15nm or more and 20nm or less,
at least one kind or more surface treating agents selected from a silane coupling agent, a titanium coupling agent, an aluminum coupling agent, and a zirconium coupling agent, having an alkoxy group or a hydroxyl group and an organic functional group, and
a transparent resin, and thereafter
molding this resin composition into a prescribed shape after melting and mixing the resin composition.

A seventh embodiment (not part of the invention) provides a manufacturing method of an ultraviolet light shielding transparent resin molding, including the steps of:
melting and mixing a resin composition containing
zinc oxide fine particles obtained by dropping and stirring a solution of a zinc compound into an alkali solution to thereby obtain a precipitate, then subjecting the precipitate to decantation by pure water, and cleaning the precipitate until conductivity of a cleaning liquid after cleaning becomes 1mS/cm or less, and thereafter applying wet treatment with alcohol to the precipitate after cleaning and drying thereafter to thereby obtain a zinc oxide precursor, and applying immersion treatment to this zinc oxide precursor by using an alcohol solution containing one kind or more elements selected from Si, Al, Zr, and Ti, and drying thereafter to thereby obtain a zinc oxide precursor containing at least one kind or more elements selected from Si, Al, Zr, and Ti, and applying heat treatment to this zinc oxide precursor at 350°C or more and 500°C or less in an atmosphere selected from any one of the atmospheric air, inert gas, and mixed gas of the inert gas and reductive gas to thereby obtain zinc oxide fine particles, with each specific surface area set at 25m²/g or more and 55m²/g or less, average particle size set at 19nm or more and 41nm or less, a half value width of a (101) peak in an X-ray diffraction measurement set at 0.5 or less, and a crystallite diameter set at 15nm or more and 20nm or less,
at least one kind or more surface treating agents selected from a silane coupling agent, a titanium coupling agent, an aluminum coupling agent, and a zirconium coupling agent, having an alkoxy group or a hydroxyl group and an organic functional group, and
a transparent resin; and thereafter
molding this resin composition into a prescribed shape after melting and mixing the resin composition.

An eighth embodiment (not part of the invention) provides a manufacturing method of an ultraviolet light shielding transparent resin molding, including the steps of:
pulverizing and dispersing by a medium stirring mill:
zinc oxide fine particles obtained by dropping and stirring a solution of a zinc compound into an alkali solution to thereby obtain a precipitate, then subjecting the precipitate to decantation by pure water, and cleaning the precipitate until conductivity of a cleaning liquid after cleaning becomes 1mS/cm or less, and thereafter applying wet treatment with alcohol to the precipitate after cleaning and drying thereafter to whereby obtain a zinc oxide precursor, and applying heat treatment to this zinc oxide precursor at 350°C or more and 500°C or less in an atmosphere selected from any one of the atmospheric air, inert gas, and mixed gas of the inert gas and reductive gas to thereby obtain zinc oxide fine particles, with each specific surface area set at 25m²/g or more and 55m²/g or less, average particle size set at 19nm or more and 41 nm or less, a half value width of a (101) peak in an X-ray diffraction measurement set at 0.5 or less, and a crystallite diameter set at 15nm or more and 20nm or less,
at least one kind or more surface treating agents selected from a silane coupling agent, a titanium coupling agent, an aluminum coupling agent, and a zirconium coupling agent, having an alkoxy group or a hydroxy group and an organic functional group, and
an organic solvent;
to thereby manufacture a dispersion liquid;
and thereafter
melting and mixing the dispersion liquid and a transparent resin; and
molding this melted mixture into a prescribed shape.

A ninth embodiment (not part of the invention) provides a manufacturing method of an ultraviolet light shielding transparent resin molding, including the steps of:
pulverizing and dispersing by a medium stirring mill:
zinc oxide fine particles obtained by dropping and stirring a solution of a zinc compound into an alkali solution to thereby obtain a precipitate, then subjecting the precipitate to decantation by pure water, and cleaning the precipitate until conductivity of a cleaning liquid after cleaning becomes 1mS/cm or less, and thereafter applying wet treatment with alcohol to the precipitate after cleaning and drying thereafter to thereby obtain a zinc oxide precursor, and applying immersion treatment to this zinc oxide precursor by using an alcohol solution containing one kind or more elements selected from Si, Al, Zr, and Ti to thereby obtain a zinc oxide precursor containing one kind or more elements selected from Si, Al, Zr, and Ti, and applying heat treatment to this zinc oxide precursor at 350°C or more and 500°C or. less in an atmosphere selected from any one of the atmospheric air, inert gas, and mixed gas of the inert gas and reductive gas to thereby obtain zinc oxide fine particles, with each specific surface area set at 25m²/g or more and 55m²/g or less, average particle size set at 19nm or more and 41nm or less, a half value width of a (101) peak in an X-ray diffraction measurement set at 0.5 or less, and a crystallite diameter set at 15nm or more and 20nm or less,
at least one kind or more surface treating agents selected from a silane coupling agent, a titanium coupling agent, an aluminum coupling agent, and a zirconium coupling agent, having an alkoxy group or a hydroxyl group and an organic functional group, and
an organic solvent;
to thereby manufacture a dispersion liquid;
and thereafter
melting and mixing the dispersion liquid and a transparent resin; and
molding this melted mixture into a prescribed shape.

A tenth embodiment (not part of the invention) provides a manufacturing method of an ultraviolet light shielding transparent resin molding, including the steps of:
pulverizing and dispersing by a medium stirring mill :
zinc oxide fine particles obtained by dropping and stirring a solution of a zinc compound into an alkali solution to thereby obtain a precipitate, then subjecting the precipitate to decantation by pure water, and cleaning the precipitate until conductivity of a cleaning liquid after cleaning becomes 1mS/cm or less, and thereafter applying wet treatment with alcohol to the precipitate after cleaning and drying thereafter to thereby obtain a zinc oxide precursor, and applying heat treatment to this zinc oxide precursor at 350°C or more and 500°C or less in an atmosphere selected from any one of the atmospheric air, inert gas, and mixed gas of the inert gas and reductive gas to thereby obtain zinc oxide fine particle, with each specific surface area set at 25m²/g or more and 55m²/g or less, average particle size set at 19nm or more and 41nm or less, a half value width of a (101) peak in an X-ray diffraction measurement set at 0.5 or less, and a crystallite diameter set at 15nm or more and 20nm or less,
at least one kind or more surface treating agents selected from a silane coupling agent, a titanium coupling agent, an aluminum coupling agent, and a zirconium coupling agent, having an alkoxy group or a hydroxyl group and an organic functional group, and
an organic solvent;
to thereby manufacture a dispersion liquid;
and thereafter
melting and mixing dry powders obtained by removing the organic solvent from this dispersion liquid and a transparent resin; and
molding this melted mixture into a prescribed shape.

An eleventh embodiment (not part of the invention) provides a manufacturing method of an ultraviolet light shielding transparent resin molding, including the steps of:
pulverizing and dispersing by a medium stirring mill:
zinc oxide fine particles obtained by dropping and stirring a solution of a zinc compound into an alkali solution to thereby obtain a precipitate, then subjecting the precipitate to decantation by pure water, and cleaning the precipitate until conductivity of a cleaning liquid after cleaning becomes 1mS/cm or less, then applying wet treatment to the precipitate after cleaning and drying thereafter to obtain a zinc oxide precursor, and applying immersion treatment to this zinc oxide precursor by using an alcohol solution containing one kind or more elements selected from Si, Al, Zr, and Ti and drying thereafter to thereby obtain a zinc oxide precursor containing one kind or more elements selected from Si, Al, Zr, and Ti, and applying heat treatment to this zinc oxide precursor at 350°C or more and 500°C or less in an atmosphere selected from any one of the atmospheric air, inert gas, and mixed gas of the inert gas and reductive gas to thereby obtain zinc oxide fine particles, with each specific surface area set at 25m²/g or more and 55m²/g or less, average particle size set at 19nm or more and 41nm or less, a half value width of a (101) peak in an X-ray diffraction measurement set at 0.5 or less, and a crystallite diameter set at 15nm or more and 20nm or less,
at least one kind or more surface treating agents selected from a silane coupling agent, a titanium coupling agent, an aluminum coupling agent, and a zirconium coupling agent, having an alkoxy group or a hydroxyl group and an organic functional group, and
an organic solvent;
to thereby manufacture a dispersion liquid;
and thereafter
melting and mixing dry powders obtained by removing the organic solvent from this dispersion liquid and a transparent resin; and
molding this melted mixture into a prescribed shape.

The ultraviolet light shielding transparent resin molding according to the present invention is the ultraviolet light shielding transparent resin using the inorganic ultraviolet light absorber, capable of exhibiting both the high ultraviolet light shielding and the low haze value, in which the transmittance of the light having a wavelength of 375nm is 30% or less, and transmittance of the light having a wavelength of 400nm is 70% or more, and a haze value is 1.3% or less, when the visible light transmittance is set at 70% or more.

### BRIEF DESCRIPTION OF THE DRAWINGS

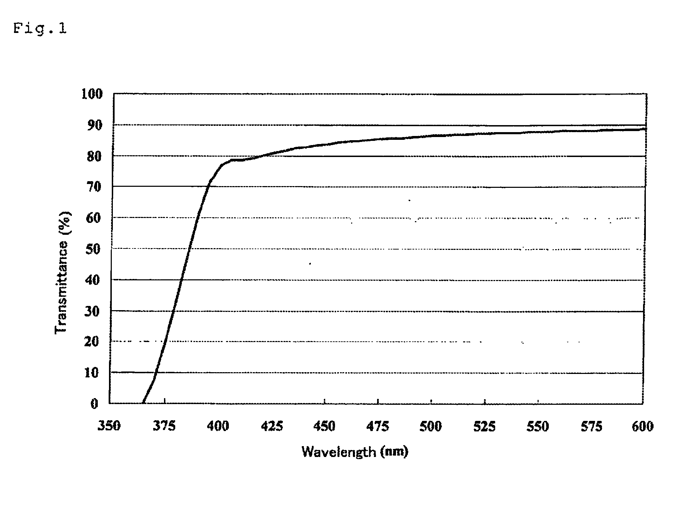

FIG.1 is a transmission profile of an ultraviolet light shielding transparent resin molding according to an example 1.

### DESCRIPTION OF PREFERRED EMBODIMENTS OF THE INVENTION

The present invention will be described in detail, in an order of 1. zinc oxide fine particles, 2 a transparent resin, 3. an ultraviolet light shielding transparent resin molding, 4. a manufacturing method of zinc oxide fine particles, 5. a dispersion method of the zinc oxide fine particles into the transparent resin, and 6. molding of the ultraviolet light shielding transparent resin molding.

### 1. Zinc oxide fine particles

The zinc oxide fine particles to be used in the resin molding of the present invention is characterized by having a specific surface area set at 25m²/g to 55m²/g, an average particle size set at 19nm two 41nm, a half value width of an X-ray diffraction peak (101) set at 0.5 or less, and a crystallize diameter set at 15nm to 20nm. It is possible to obtain the ultraviolet light shielding transparent resin molding capable of exhibiting transparency and excellent ultraviolet light shielding characteristics, with 30% or less transmittance of a light having a wavelength of 375nm, 70% or more transmittance of a light having a wavelength of 400nm, and 1.3% or less haze value when the visible light transmittance set at 70% or more, by dispersing the zinc oxide fine particles, with the specific surface area, the average particle size, the half value width of the X-ray peak, and the crystallite diameter set within the aforementioned range, into a transparent thermoplastic resin as will be described later. Note that the visible light transmittance conforms to JIS-3106-1998, and is an integrated value of the visible light transmittance (wavelength range of 380nm to 780nm) based on a CIE light adaptation standard relative luminance sensitivity by a light of Commission internationale de l'eclairage.

In the zinc oxide fine particles, when the specific surface area is 55m²/g or less, and the average particle size is 19nm or more, the ultraviolet light shielding characteristics can be ensured. As a result, the transmittance of the light having a wavelength of 375nm is 30% or less, and a use amount of fine particles of an ultraviolet light shielding material necessary for exhibiting desired ultraviolet light shielding characteristics is suppressed. Accordingly, the cost and haze value can be suppressed, and this is preferable.
Meanwhile, regarding each zinc oxide fine particle, when the specific surface area is 25m²/g or more, and the average particle size is 41nm or less, it is possible to avoid decrease of the visible light transmittance and the transmittance of the light having a wavelength of 400nm and a high haze value, by particles becoming a scattering source. Further, when the half value width of the X-ray diffraction (101) peak is 0.5 or less, the average particle size of each particle is 19nm or more, and desired ultraviolet light shielding characteristics can be obtained.

Here, the specific surface area of the zinc oxide fine particle is measured by a publicly-known BET method. For example, Macsorb (registered trade mark) by MAUNTEKKU Corporation can measure the specific surface area of a sample by the BET method.
The average particle size is a value obtained by the following formula d = 6/p. S (d; particle size, p; true density, S; specific surface area).
The X-ray diffraction can be measured by a publicly-known powder method.
The crystallite diameter can be measured by Sxherrer's method.

### 2. Transparent resin

The transparent resin used in the present invention is not particularly limited, provided that this is a transparent thermoplastic resin with high transmittance of light beams in a visible light region. The transparent resin with 50% or more visible light transmittance (described in JIS R3106-1998) and 30% or less haze value (described in JIS K7105-1981) when formed into a plate-like molding with a thickness of 3mm, can be given as an example. Specifically, acrylic resin, polycarbonate resin, vinyl chloride resin, polystyrene resin, polyether sulfone resin, fluorinated resin, polyolefin resin, and polyester resin can be given as examples.

When the ultraviolet light shielding transparent resin molding according to the present invention is used for the purpose of being applied to each kind of buildings and a window material of a vehicle, transparency, impact resistance, and weather resistance must be taken into consideration. Therefore, the acrylic resin, the polycarbonate resin, polyetherimide resin, and the fluorinated resin are more preferable.

A polymer or a copolymer mainly composed of methyl methacrylate, ethyl methacrylate, propyl methacrylate and butyl methacrylate, in which acrylic acid ester, vinyl acetate, styrene, acrylonitrile, and methacrylonitrile, etc, having a 1-8C alkyl group are used as a copolymerization component as needed, can be given as examples of the acrylic resin. In addition, the acrylic resin by further multistage polymerization can also be used.

An aromatic polycarbonate is preferable as a polycarbonate resin. A polymer obtained by a publicly-known method such as an interface polymerization, a melt polymerization and a solid phase polymerization, from one kind or more of a dihydric phenol-based compound represented by 2,2-bis(4-hydroxyphenyl) propane, 2,2-bis(3,5-dibromo-4-hydroxyphenyl) propane, and a carbonate precursor represented by phosgene or diphenyl carbonate, can be given as the aromatic polycarbonate.

Polyethylene fluoride, polyethylene 2 fluoride, polyethylene 4 fluoride, ethylene-ethylene 2 fluoride copolymer, ethylene-ethylene 4 fluoride copolymer ethylene 4 fluoride-perfluoroalkoxyethylene copolymer, are given as a fluoride-based resin.

### 3. Ultraviolet light shielding transparent resin molding

The ultraviolet light shielding transparent resin molding according to the present invention is the ultraviolet light shielding transparent resin molding, with zinc oxide fine particles of the present invention dispersed into the aforementioned transparent resin.
The ultraviolet light shielding transparent resin molding according to the present invention has 30% or less transmittance of light having the wavelength of 375nm, and 70% or more transmittance of light having the wavelength of 400nm, and 1.3% or less haze value, when the visible light transmittance is set at 70% or more.

The ultraviolet light shielding transparent resin molding according to the present invention can be obtained by melting and mixing the zinc oxide fine particles, the surface treating agent, and the resin composition containing the transparent resin, and then molding them into a prescribed shape.

In addition, in the ultraviolet light shielding transparent resin molding according to the present invention, the visible light transmittance can be set to be 70% or more, by changing a content and the particle size of the zinc oxide fine particle in the ultraviolet light shielding transparent resin molding, and by selecting a thickness of the ultraviolet light shielding transparent resin molding.

Generally, in the ultraviolet light shielding molding, when the visible light transmittance is set at 70% or more, the transmittance of the light having the wavelength of 375nm exceeds 30%, and an effect of shielding ultraviolet light becomes insufficient. Also, when the haze value exceeds 1.3%, an outer appearance is clouded, thus making it impossible to exhibit the transparency and excellent ultraviolet light shielding performance.

Meanwhile, in the ultraviolet light shielding transparent resin molding according to the present invention, even when the visible light transmittance is set at 70% or more, the transmittance of the light having the wavelength of 375nm is 30% or less, and the transmittance of the light having the wavelength of 400nm is 70% or more. Namely, the transmittance of the ultraviolet light having the wavelength of 375nm in the vicinity of a visible region is low, and the transmittance of the light having the wavelength of 400nm in the visible region is drastically increased. Therefore, both the shielding performance of the ultraviolet light and the transparency to the visible light can be ensured.
Here, as described above, "when the visible light transmittance is set at 70% or more" means that the visible light transmittance is set at 70% or more by changing the content and the particle size of the zinc oxide fine particle in the ultraviolet light shielding transparent resin molding, and by suitably selecting the thickness of the ultraviolet light shielding transparent resin molding, etc.

The content of the zinc oxide fine particles in the ultraviolet light shielding transparent resin molding is 0.01wt% to 30wt%, and preferably 0.05wt% to 10wt%. The zinc oxide fine particles are preferably dispersed into the ultraviolet light shielding transparent resin molding. When the content of the zinc oxide fine particles is 0.01wt% or more, the effect of shielding the ultraviolet light can be expected, and the transmittance of the light having the wavelength of 375nm does not exceed 30%. Meanwhile, when the content of the zinc oxide fine particles is 30wt% or less, the visible light transmittance of the ultraviolet light shielding transparent resin molding is 70% or more, and the transparency can be ensured.

### 4. Manufacturing method of the zinc oxide fine particles

Generally, a dry method and a wet method are known as the manufacturing method of the zinc oxide fine particles. However, the zinc oxide fine particles obtained by a general manufacturing method are frequently formed into coarse particles with each particle size exceeding 1µm. Also, although the manufacturing method of the zinc oxide fine particles having a large specific surface area is disclosed, there is a problem of impurities.

As described above, the zinc oxide fine particles used in the present invention having the specific surface area in a prescribed range, the average particle size, the half value width of the X-ray diffraction (101) peak, and the crystallite diameter, is obtained by the method including the steps of: dropping and stirring the zinc compound solution into the alkali solution, to thereby obtain the precipitate, and after cleaning the precipitate by decantation until the conductivity of the cleaning liquid becomes 1mS/cm or less, then applying wet treatment to this precipitate with alcohol and drying thereafter to thereby obtain the zinc oxide precursor, and applying heat treatment to this zinc oxide precursor at 350°C or more and 500°C or less in the atmosphere selected from any one of the atmospheric air, inert gas, and mixed gas of the inert gas and the reductive gas.

According to the manufacturing method of the zinc oxide fine particles used in the present invention, by dropping the zinc compound solution into the alkali solution, the zinc compound solution reaches super-saturation instantaneously to thereby generate the precipitate. Therefore, uniform zinc oxide fine particles having the same particle size can be obtained. Further, the generated precipitate is cleaned by decantation using the pure water. The decantation is repeated until the conductivity of the cleaning liquid after cleaning becomes 1mS/cm or less, and the impurities are sufficiently removed. Thus, it is possible to avoid the degradation of the ultraviolet light shielding performance of the ultraviolet light shielding transparent resin molding according to the present invention, with the zinc oxide fine particles dispersed therein. As a result, it is possible to provide the ultraviolet light shielding transparent resin molding capable of exhibiting excellent ultraviolet light shielding performance in addition to the transparency.
The manufacturing method of the zinc oxide fine particles used in the present invention will be described hereunder in detail.

The manufacturing method of the zinc oxide fine particles used in the present invention includes the following steps.
(1) the step of dropping and stirring the zinc compound solution into the alkali solution to thereby obtain the precipitate;
(2) the step of subjecting the obtained precipitate to decantation, and the step of repeating the decantation until the conductivity of the cleaning liquid after decantation becomes 1ms/cm or less;
(3) the step of applying wet treatment to the precipitate after decantation with alcohol solution to thereby obtain a wet-treated substance;
(4) the step of drying the wet-treated substance to thereby obtain the zinc oxide precursor; and
(5) the step of applying heat treatment to the zinc oxide precursor at 350°C or more and 500°C or less in the atmosphere selected from any one of the atmospheric air, inert gas, and mixed gas of the inert gas and the reductive gas, to thereby obtain the zinc oxide fine particles.

First, explanation will be given for (1) the step of dropping and stirring the zinc compound solution into the alkali solution to thereby obtain the precipitate.
In this step, the zinc compound solution is dropped into the alkali solution and this alkali solution is stirred continuously to thereby generate the precipitate. This is because by dropping the zinc compound solution into the alkali solution and stirring this alkali solution continuously so that this zinc compound solution reaches the super-saturation instantaneously to thereby generate the precipitate. As a result, it is possible to obtain the uniform fine particles having relatively the same particle size. Meanwhile, when the alkali solution is dropped into the zinc compound solution and when the zinc compound solution and the alkali solution are dropped in parallel, the uniform fine particles having the relatively same particle size can not be obtained, unlike the present invention.

Here, the zinc compound used in this step is not particularly limited. Zinc nitrate, zinc chloride, zinc acetate, and zinc sulfated, etc, can be given as examples of the zinc compound. However, among them, the zinc nitrate is preferable in terms of removing the impurities.
The concentration of the zinc compound in the zinc compound solution, as converted to an amount of Zn in the zinc compound, is preferably set at 0.1mol/L to 3mol/L, from a viewpoint of the yield, particle size, and its uniformity.
Also, the alkali solution used as a precipitating agent is not particularly limited. Each aqueous solution of ammonium acid carbonate, ammonia water, sodium hydrate, and potassium hydrate, is given as an example of the alkali solution.
Alkali concentration of the precipitating agent is preferably set to be more than the chemical equivalent amount required for the zinc compound turned into hydroxide, and further preferably set to be an equivalent amount to excess amount of 1.5 times, from a viewpoint of shortening a cleaning time during decantation after the step. Although a temperature of the alkali solution at this time is not particularly limited, it is preferably set at 50°C or less, or a room temperature. Particularly, when a liquid temperature is set to be the room temperature or less, a cooling device, etc, is newly required. Therefore, preferably the liquid temperature is set so as not to require such a device.

A drop time of the zinc compound solution is not particularly limited. However, it is set to be 30 minutes or less, preferably set to be 20 minutes or less, and further preferably set to be 10 minutes or less, from a viewpoint of productivity. After drop of the zinc compound solution is finished, aging is performed while continuously stirring the zinc compound solution so that uniformity in a system is achieved. The temperature at this time is preferably set to be the same temperature as the temperature for generating the precipitate. Also, the time for stirring continuously is not particularly limited, and it may be sufficiently 30 minutes or less or preferably 15 minutes or less, from the viewpoint of productivity.

Next, explanation will be given for (2) the step of subjecting the obtained precipitate to decantation.
It is necessary to sufficiently clean the precipitate obtained by aging, by decantation using the pure water. Specifically, the decantation is performed repeatedly until the conductivity of the cleaning liquid after decantation becomes 1mS/cm or less. By cleaning the precipitate until the conductivity of the cleaning liquid after cleaning becomes 1mS/cm or less, it is possible to avoid deterioration of desired ultraviolet light shielding characteristics caused by residual impurities such as chloride ion, nitrate ion, sulfate ion, acetate ion. Accordingly, the precipitate is sufficiently cleaned until the conductivity of a supernatant liquid of the cleaning liquid becomes 1 mS/cm or less (corresponding to 1.5% or less of the residual impurities).

Next, explanation will be given for the (3) step of applying wet treatment to the precipitate after decantation with alcohol solution, to thereby obtain the wet-treated substance.
In this wet treatment, the concentration of the alcohol solution is preferably set at 50% or more. When the concentration of the alcohol solution is set at 50% or more, it is possible to prevent the zinc oxide fine particles from being formed into a strongly agglomerating body, and dispersion in the solvent is efficiently advanced. This is because the haze value is also set at 1% or less as a result, when the ultraviolet light shielding transparent resin molding is formed by dispersing the zinc oxide fine particles into the transparent resin, and excellent transparency is exhibited.

Here, although alcohol used in the alcohol solution is not particularly limited, the alcohol having excellent solubility to water, with a boiling point of 100°C or less, is preferable. For example, methanol, ethanol, propanol, and tert-butyl alcohol are given as examples.

In the wet treatment, the precipitate after decantation may be charged into the alcohol solution and stirred therein. A stirring time and a stirring speed at this time may be suitably selected, according to a treating amount.
When the precipitate after decantation is charged into the alcohol solution the amount of the alcohol solution is adjusted, so that the precipitate can be easily stirred and fluidity can be ensured. The stirring time and the stirring speed may be suitably selected, under a condition that the precipitate including a partially agglomerated part is uniformly mixed until an agglomerated part is eliminated in the alcohol solution.

Although the wet treatment may be performed under the room temperature, of course it is also possible to perform the wet treatment while heating, so that the alcohol does not escape as vapor. When heating is performed at a temperature under the boiling point of the alcohol, it is possible to prevent a circumstance such as allowing the alcohol to escape as vapors during the wet treatment and the effect of the wet treatment to be lost. This is because when the wet treated substance is dried after the alcohol escapes as vapors during the wet treatment and the effect of the wet treatment is lost, the wet treated substance is turned into a strongly agglomerating body.

Next, explanation will be given for (4) the step of drying the wet treated substance to thereby obtain the zinc oxide precursor.
The wet treated substance after wet treatment is heated and dried in a state of being immersed in the alcohol. Here, a drying temperature and a drying time in this heating and drying treatment are not particularly limited. Even if the wet treated substance is dried, it is not turned into the strongly agglomerating body, provided that it is heated and dried after the wet treatment. Accordingly, the drying temperature and the drying time may be suitably selected, depending on conditions such as a treating amount of the wet treated substance and a treatment device.

By this dry treatment, a fine particle shaped zinc oxide precursor, which is subjected to the wet treatment, is obtained. The zinc oxide precursor has a mixed phase of ZnCO₃ and Zn₅ (CO₃)₂(OH)₆. Then, (1.04)XRD peak intensity ratio of ZnCO₃ to (200)XRD peak intensity of Zn₅(CO₃)₂(OH)₆ is preferably set at 0.9 or more.
This is because when the (104)XRD peak intensity ratio of ZnCO₃ to (200)XRD peak intensity of Zn₅(CO₃)₂(OH)₆ is set at 0.9 or more, it is possible to obtain desired values of the crystallite diameter, the specific surface area, and the average particle size of the zinc oxide fine particle after heat treatment, and the ultraviolet light shielding body composed of the zinc oxide fine particles exhibits desired optical characteristics.

In addition, even if the ratio of the (200)XRD peak intensity of Zn₅(CO₃)₂(CH)₆ to the (104)XRD peak intensity of ZnCO₃ exceeds 2.5, the effect is saturated. Meanwhile, when the XRD peak intensity ratio is 2.5 or less, it is possible to prevent deterioration of cleaning efficiency of the precipitate caused by an increase of the alkali concentration required for neutralization. Accordingly, the XRD peak intensity ratio is preferably set at 2.5 or less.
In order to set the XRD peak intensity ratio at 0.9 or more, preferably the zinc compound solution is dropped into the alkali solution and pH during neutralization is maintained to be 7.0 or more.

According to the zinc oxide fine particles used in the present invention, in order to suppress a particle growth when the zinc oxide fine particle precursor is baked, a state of fine particles can be maintained even heat treatment, by containing one kind or more elements selected from Si, Al, Zr, and Ti in advance. Si source, Al source, Zr source, and Ti source as the aforementioned elements are not particularly limited.

When one kind or more elements selected from Si, Al, Zr, and Ti are contained in the alcohol solution in advance, compounds containing one kind or more elements selected from Si, Al, Zr, and Ti are independently dispersed between ZnCO₃ and Zn₅(CO₃)₂(OH)₆ generated by dropping the zinc compound solution, and the particle growth of the zinc oxide generated by heat treatment can be suppressed. When the content of these elements on an oxide basis is 15wt% or less, relatively, reduction of the content of the zinc oxide can be prevented, and this is preferable because deterioration of the ultraviolet light shielding characteristics and deterioration of shielding power can be prevented.

Finally, explanation will be given for (5) the step of applying heat treatment to the zinc oxide precursor at 350°C or more and 500°C or less in the atmosphere selected from any one of the atmospheric air, inert gas, and mixed gas of the inert gas and the reductive gas, to thereby obtain the ultraviolet light shielding material fine particles.
The heat treatment is applied to the zinc oxide precursor subjected to dry treatment, to improve the ultraviolet light shielding characteristics and the shielding power. The heat treatment is performed in the atmosphere selected from any one of the atmospheric air, inert gas such as nitrogen, argon, helium, etc, and mixed gas of the inert gas and the reductive gas such as hydrogen. A heat treatment temperature at this time is required to be set at 350°C or more as a lower limit, and 500°C or less as an upper limit, from a viewpoint of obtaining the desired ultraviolet light shielding characteristics. Meanwhile, a treatment time may be suitably selected according to the treating amount and the heat treatment temperature of the aforementioned precursor.
By the above-described heat treatment, it is possible to obtain particles of an ultraviolet light shielding material containing the zinc oxide fine particles, with the specific surface area set at 25m²/g to 55m²/g, the average particle size set at 19nm to 41nm, the half value width of (101) peak of the X-ray diffraction peak set at 0.5 or less, and the crystallite diameter set at 15nm to 20nm.

Preferably, the fine particles of the ultraviolet light shielding material used in the present invention are coated with oxides containing one kind or more elements selected from any one of Si, Al, Zr, and Ti, to suppress its photocatalytic activity and improve dispersability into the transparent resin. These elements can be contained in the fine particles of the ultraviolet light shielding material, by coating the surface with at least one kind of surface treating agent selected from a silane coupling agent, a titanium coupling agent, an aluminum coupling agent, and a zirconium coupling agent. The surface treating agent having an alkoxyl group having affinity and forming bond with the surfaces of the zinc oxide fine particles, and an organic functional group having affinity with the transparent resin, is used. Methoxy group, ethoxy group, and ispropoxy group are given as examples of the alkoxyl group. However, the alkoxyl group is not particularly limited, provided that it is easily hydrolysable and is capable of forming bond with the surfaces of the zinc oxide fine particles. Alkyl group, vinyl group, γ-(2-aminoethyl) aminopropyl group, γ-glycidoxypropyl group, γ-amilinopropyl group, γ-mercaptopropyl group, and γ-methacryloxy group, etc, can be given as examples of the organic functional group, but the organic functional group is not particularly limited, provided that it has affinity with the transparent resin.

It is also possible to use an organic molecular dispersant together with the aforementioned coupling agents, for the purpose of improving the dispersability of the zinc oxide fine particles into the transparent resin.

A blending ratio of the zinc oxide fine particles and the surface treating agent in the present invention is preferably set to be 0.05 ≤ X ≤ 10 (wherein X: added amount of the surface treating agent/added amount of the zinc oxide fine particles). When the value of X is 10 or less, mechanical characteristics and weather resistance of the obtained ultraviolet light shielding transparent resin molding can be ensured. Also, when the value of X is 0.05 or more, the surface of each zinc oxide fine particle can be sufficiently treated, then the dispersabiltiy of the zinc oxide fine particles can be ensured, and the transparency of the obtained ultraviolet light shielding transparent resin molding can be ensured.

An amount of the zinc oxide fine particles dispersed into the ultraviolet light shielding transparent resin molding according to the present invention is set in a range of 0.01wt% to 30wt%, and more preferably is set in a range of 0.05wt% to 10wt%. When the content of the zinc oxide fine particles is set at 0.05wt% or more, although depending on a thickness of the ultraviolet light shielding transparent resin molding to be molded, desired ultraviolet light shielding characteristics can be obtained. Also, when the content of the zinc oxide fine particles is set at 30% or less, agglutination of the zinc oxide fine particles can be prevented, thus making it possible to ensure sufficient dispersability into the resin and ensure the transparency of the obtained ultraviolet light shielding transparent resin molding.

### 5. Dispersion method of the zinc oxide fine particles into the transparent resin

A method of uniformly dispersing the zinc oxide fine particles into the resin can be arbitrarily selected, as a dispersion method of the zinc oxide fine particles into the transparent resin. For example, a resin composition, with the zinc oxide fine particles uniformly dispersed in the transparent resin, can be adjusted by a method of uniformly melting and mixing the zinc oxide fine particles, the surface treating agent selected from the silane coupling agent, the titanium coupling agent, the aluminum coupling agent, and the zirconium coupling agent, and powders or pellet of the transparent resin, by using a mixing machine such as a Ribbon blender, a tumbler, a Nauta mixer, a Henschel mixer, a super mixer, a planetary mixer, and a kneading machine such as a Banbury mixer, a kneader, a roll, a single screw extruder, and a twin screw extruder. In addition, a zinc oxide fine particles dispersion liquid, with the zinc oxide fine particles and the aforementioned surface treating agent dispersed in the solvent arbitrarily, is prepared by using a method such as bead mill, ball mill, sand mill, and ultrasonic dispersions, to thereby obtain the powders or pellet of the zinc oxide fine particles dispersion liquid and the transparent resin. Then, it is also possible to use a method of uniformly melting and mixing the powders or pellet while removing the solvent, by using the aforementioned mixing machine and the kneading machine. Further, it is also possible to use a method of uniformly melting and mixing the obtained dried substance and the powders or pellet of the transparent resin, while removing the solvent of the zinc oxide fine particles dispersion liquid by a publicly-known method. In short, the method is not limited to the aforementioned method, provided that the zinc oxide fine particles are uniformly dispersed into the transparent resin.

For example, it is also acceptable that a dispersion liquid is adjusted by pulverizing/dispersing the zinc oxide fine particles, the coupling agent, and the organic solvent by a medium stirring mill, and the dispersion liquid and the transparent resin are melted and mixed, then molded into a prescribed shape. It is also acceptable that the dried powders with the organic solvent removed from the dispersion liquid, and the transparent resin are melted and mixed, and then molded into a prescribed shape.

Here, uniform dispersion means a state that the transmittance of the light having the wavelength of 375nm, is 30% or less, and the transmittance of the light having the wavelength of 400nm is 70% or more, and the haze value is 1.3% or less, when the visible light transmittance of the ultraviolet light shielding transparent resin molding according to the present invention is set at 70% or more. Specifically, this is a state, for example, that there are no particles exceeding 50nm when the zinc oxide fine particles in the ultraviolet light shielding transparent resin molding are observed by an electronic microscope such as TEM.

The organic solvent used here is not particularly limited, and for example, each kind of a general organic solvent such as alcohol, ether, ester, ketone, and aromatic compound can be used. Further water can also be used.

### 6. Molding of the ultraviolet light shielding transparent resin molding

A publicly-known method can be applied to molding of the ultraviolet light shielding transparent resin molding according to the present invention.
A shape of the aforementioned ultraviolet light shielding transparent resin molding can be arbitrarily molded as needed, and can be molded into a flat shape and a curved shape. In addition, the thickness of the ultraviolet light shielding transparent resin molding can be adjusted to an arbitrary thickness as needed, such as a plate shape and a film shape. Further, a resin sheet formed into a flat state can be molded into an arbitrary shape such as a spherical shape by post-treatment.

An arbitrary method such as injection molding, extrusion molding, compression molding, or rotation molding can be given as a specific molding method of the ultraviolet light shielding transparent resin molding according to the present invention. Particularly, a method of obtaining a molding by the injection molding, and a method of obtaining the molding by the extrusion molding are suitably adopted. As a method of obtaining a plate-shaped or film-shaped molding by the extrusion molding, the molding is made by taking up a molten thermoplastic resin extruded by using the extrusion machine such as a T-die while being cooled by a cooling roll. It is also possible to make the ultraviolet light shielding transparent resin molding by the same method, after the resin composition is set in a state of pellet by a granulation device.

Of course, it is also possible to form the ultraviolet light shielding transparent resin molding according two the present invention into a laminate, by being laminated on other transparent base material. For example, the laminate having an ultraviolet light shielding function and a scattering preventing function can be obtained by integrally laminating the ultraviolet light shielding transparent resin molding molded into a film shape in advance on an inorganic glass by a thermal laminate method. It is also possible to obtain the laminate by integrally laminating the ultraviolet light shielding transparent resin molding on other transparent base material simultaneously with molding the ultraviolet light shielding transparent resin molding, by a co-extrusion method, a press-molding method, and the injection molding. This laminate can be used as a further useful construction material by complementing mutual defects, while effectively exhibiting advantages of mutual base materials.

The ultraviolet light shielding transparent resin molding according to the present invention is the ultraviolet light shielding transparent resin molding having the visible light transmittance set at 70% or more, with the zinc oxide fine particles dispersed in the transparent resin. Then, the ultraviolet light shielding transparent resin molding according to the present invention exhibits optical characteristics such as 30% or less transmittance of the light having the wavelength of 375nm and 70% or more transmittance of the light having the wavelength of 400nm, and 1.3% or less haze value, when the visible light transmittance is set at 70% or more.

A publicly-known resin additive such as a plasticizer, a flame retardant, a die, and a pigment can be added to the ultraviolet light shielding transparent resin molding according to the present invention. It should be noted that even if these resin additives are added, the transmittance of the light having the wavelength of 375nm is 30% or less, the transmittance of the light having the wavelength of 400nm is 70% or more, and the haze value is 1.3% or less, when the visible light transmittance is set at 70% or more. Of course the obtained ultraviolet light shielding transparent resin molding has the transparency to the visible light and the effect of shielding the ultraviolet light.

### (Examples)

Examples of the embodiment of the present invention will be given hereunder, and explanation will be given therefore further specifically. However, the present invention is not limited to the examples described hereunder.
The visible light transmittance and the ultraviolet light transmittance of the obtained ultraviolet light shielding transparent resin molding were measured by using a spectrophotometer U-4000 by HITACHI LTD. Also, the haze value was measured by using HR-200 by MURAKAKMI Color Research Laboratory.

### (Example 1)

1100g of aqueous solution containing 86.9g of ammonium hydrogen carbonate (special grade) was prepared.
The aqueous ammonium hydrogen carbonate was stirred at 25°C, and 946.1g aqueous solution containing 148.4g zinc nitrate 6 hydrate (special grade) was dropped for 6 minutes and the precipitate was thereby generated. The solution after drop was further stirred for 10 minutes, and aging of the precipitate was carried out. Final pH at this time was 7.5.
Next, cleaning of the precipitate was repeated by decantation using the pure water, and the cleaning was performed until the conductivity of the cleaning liquid after cleaning became 1mS/cm or less.
The precipitate after cleaning was dried at 105°C to thereby obtain the dried powders. 20g of dried powders were stirred for 10 minutes in 80g of modified alcohol (Solmix AP-2 (product name: abbreviated as "AP-2" hereafter in some cases) by Japan Alcohol Trading Co., Ltd.) solution containing 8.2g of colloidal silica (20wt.% content of SiO₂), and dried thereafter to thereby obtain the dried substance. Then, this dried substance was subjected to heat treatment for 1 hour at a temperature of 400°C in the atmospheric air, to thereby obtain a zinc oxide fine particle "a".

The zinc oxide fine particle "a" is the zinc oxide fine particle containing 10% SiO₂ in which the specific surface area is 54.5m²/g, the average particle size is 19.0nm, the half value width of the X-ray diffraction (101) peak is 0.43, and the crystallite diameter is 17.8nm.

The zinc oxide fine particle "a" was added to the polycarbonate resin so that ZnO concentration was 0.14wt%, and further the silane coupling agent (SH6040 by Dow Corning Toray Co.,Ltd.) was added to the polycarbonate resin so as to be 0.14wt%, and mixed thereafter by a V-blender, to thereby obtain a mixture. The mixture was melted and kneaded (melting and kneading temperature 300°C) by the twin screw extruder and molded to have a thickness of 2mm, to thereby obtain an ultraviolet light shielding transparent resin molding A, with the zinc oxide fine particles "a" uniformly dispersed therein entirely and the visible light. transmittance set at 70% or more.

Regarding the optical characteristics of the ultraviolet light shielding transparent resin molding A, the visible light (having wavelength of 400nm to 780nm) transmittance, the transmittance of the light having the wavelength of 375nm and 400nm, and the haze value were measured, and an outer appearance was visually confirmed. The optical characteristics of the ultraviolet light shielding transparent resin molding A are shown in table 1, and a transmission profile is shown in FIG.1. Here, FIG.1 shows a graph in which the wavelength of the light is taken on the horizontal axis, and the transmittance of the light is taken on the vertical axis.

### (example 2)

In the manufacture of the zinc oxide fine particles, similar operation as that of the example 1 was performed, excluding the point that the amount of ammonium hydrogen carbonate was set at 79g and colloidal silica was not added, to thereby obtain a zinc oxide fine particle "b".

In the zinc oxide fine particle "b", the specific surface area was 36.4m²/g, the average particle size was 28.4nm, the half value width of the X-ray diffraction (101) peak was 0.38, and the crystallite diameter was 19.3nm.

An ultraviolet light shielding transparent resin molding B was obtained in the same way as the example 1, excluding the point that the zinc oxide fine particle "b" was used instead of the zinc oxide fine particule "a". The optical characteristics of the ultraviolet light shielding transparent resin molding B are shown in table 1.

### (Comparative example 1)

Similar operation as that of the example 1 was performed, excluding the point that a commercially available zinc oxide fine particle (FINEX 75 by SAKAI CHEMICAL Industry Co., LTD.) was prepared as a zinc oxide fine particle.

In the zinc oxide fine particle "c", the specific surface area was 75.4m²/g, the average particle size was 13.7nm, and the half value width of the X-ray diffraction (101) peak was 0.51, and the crystallite diameter was 13.5nm.

An ultraviolet light shielding transparent resin molding C was obtained in the same way as the example 1, excluding the point that the zinc oxide fine particle "c" was used instead of the zinc oxide fine particle "a". The optical characteristics of the ultraviolet light shielding transparent resin moulding C are shown in table 1.

### (Comparative example 2)

In the manufacture of the zinc oxide fine particles, the similar operation as that of the example 1 was performed excluding the point that the particles were baked at 600°C, to thereby obtain a zinc oxide fine particle "d".

In the zinc oxide fine particle "d", the specific surface area was 18.5m²/g, the average particle size was 56.0nm, the half value width of the X-ray diffraction (101) peak was 0.26, and the crystallite diameter was 48.3nm.
An ultraviolet light shielding transparent resin molding D was obtained in the same way as the example 1, excluding the point that the zinc oxide fine particle "d" was used instead of the zinc oxide fine particle "a". The optical characteristics of the ultraviolet light shielding transparent resin molding D are shown in table 1.
Note that in the comparative example 2, the haze value is high, and the visible light transmittance of the ultraviolet light shielding transparent resin molding D can not be set at 70% or more.

### (Example 3)

20g of the zinc oxide fine particle "a" manufactured in the example 1, 70g of toluene, 10g of the silane coupling agent (SH6040 by Toray Dow Coning Co., Ltd.) were mixed, which were then pulverized an dispersed for 6 hours by using zirconia beads having a diameter of 0.3mm, to whereby manufacture 100g of the zinc oxide fine particles dispersion liquid (B-liquid).

The B-liquid was added to the polycarbonate resin, so that the concentration of ZnO becomes 0. 14wt%. Then, the similar operation as that of the example 1 was performed, to thereby obtain an ultraviolet light shielding transparent resin molding E, with the zinc oxide fine particles uniformly dispersed therein entirely. The optical characteristics of the ultraviolet light shielding transparent resin molding E are shown in table 1.

### (Example 4)

The similar operation as that of the example 1 was performed excluding the point that melting and kneading (kneading temperature 250°C) was performed by using PET resin instead of the polycarbonate resin, to thereby obtain a sheet-like ultraviolet light shielding transparent resin molding F, with the zinc oxide fine particles uniformly dispersed therein entirely. The optical characteristics of the ultraviolet light shielding transparent resin molding F are shown in table

### (Example 5)

The similar operation as that of the example 1 was performed excluding the point that melting and kneading (kneading temperature 280°C) was performed by using acrylic resin instead of the polycarbonate resin, to thereby obtain an ultraviolet light shielding transparent resin molding G, with the zinc oxide fine particles uniformly dispersed therein entirely. The optical characteristics of the ultraviolet light shielding transparent resin molding G are shown in table 1.

### (Example 6)

The similar operation as that of the example 1 was performed excluding the point that the titanium coupling agent (KR44 by Ajinomoto CO.,Inc.) was used instead of the silane coupling agent (SH6040 by Toray Dow Coning), to thereby obtain an ultraviolet light shielding transparent resin molding H, with the zinc oxide fine particles uniformly dispersed therein entirely. The optical characteristics of the ultraviolet light shielding transparent resin molding H are shown in table 1.

### (Example 7)

The similar operation as that of the example 1 was performed excluding the point that the aluminum coupling agent (Plenact AL-M by Ajinomoto Co.,.Inc.) was used instead of the silane coupling agent (SH6040 by Toray Dow Coning), to thereby obtain an ultraviolet light shielding transparent resin molding I, with the zinc oxide fine particles uniformly dispersed therein entirely. The optical characteristics of the ultraviolet light shielding transparent resin molding I are shown in table 1.

### (Example 8)

The similar operation as that of the example 1 was performed excluding the point that the zirconium coupling agent (APG-X by MANCHEM Co., Inc.) was used instead of the silane coupling agent (SP6040 by Toray Dow Coning), to thereby obtain an ultraviolet light shielding transparent resin molding J, with the zinc oxide fine particles uniformly dispersed therein entirely. The optical characteristics of the ultraviolet light shielding transparent resin molding J are shown in table 1.

### (Example 9)

The similar operation as that of the example 1 was performed excluding the point that the concentration of ZnO was set at 0.05wt%, and the silane coupling agent (SH6040 by Toray Dow Coning Co., Ltd.) was set at 0. 025wt%, to thereby obtain an ultraviolet light shielding transparent resin molding K. The optical characteristics of the ultraviolet, light shielding transparent resin molding K are shown in table 1.

### (Example 10)

The similar operation as that of the example 1 was performed excluding the point that the concentration of ZnO was set at 6wt% and the silane coupling agent (SH6040 by Toray Dow Coning Co., Ltd.) was set at 6wt%, to thereby obtain an ultraviolet light shielding transparent resin molding L. The optical characteristics of the ultraviolet light shielding transparent resin molding L are shown in table 1.

**Table 1**

| | Zinc oxide particles | | | | | Molding | | | | | | | |
|---|---|---|---|---|---|---|---|---|---|---|---|---|---|
| | Sample | Crystallite diameter | Specific surface area | Average particle size | (101) Peakhalf value width | Sample | Resin | Coupling agent | Visible light transmittance | 375nm, Transmittance | 400nm Transmitttance | Haze value | Outer apperance |
| | | (nm) | (m²/g) | (nm) | | | | | (%) | (%) | (%) | (%) | |
| Example 1 | a | 17.8 | 54.5 | 19.0 | 0.43 | A | Polycarbonate | Silane coupling | 88.1 | 20.0 | 76.8 | 0.9 | Transparent |
| Example 2 | b | 19.3 | 36.4 | 28.4 | 0.38 | B | Polycarbonate | Silane coupling | 85.0 | 18.2 | 74.1 | 1.2 | Transparent |
| Comparative ex.1 | c | 13.5 | 75.4 | 13.7 | 0.51 | C | Polycarbonate | Silane coupling | 89.8 | 32.3 | 84.3 | 0.8 | Transparent |
| Comparative ex.2 | d | 48.3 | 18.5 | 56.0 | 0.26 | D | Polycarbonate | Silane coupling | 55.5 | 12.1 | 48.4 | 3.9 | Cloudy |
| Example 3 | a | 17.8 | 54.5 | 19.0 | 0.43 | E | Polycarbonate | Silane coupling | 88.1 | 19.9 | 76.9 | 0.9 | Transparent |
| Example 4 | a | 17.8 | 54.5 | 19.0 | 0.43 | F | PET | Silane coupling | 88.8 | 20.3 | 77.3 | 1.0 | Transparent |
| Example 5 | a | 17.8 | 54.5 | 19.0 | 0.43 | G | Acrylic | Silane coupling | 87.4 | 20.6 | 76.2 | 1.0 | Transparent |
| Example 6 | a | 17.8 | 54.5 | 19.0 | 0.43 | H | Polycarbonate | Titanium coupling | 88.0 | 20.1 | 76.7 | 1.0 | Transparent |
| Example 7 | a | 17.8 | 54.5 | 19.0 | 0.43 | I | Polycarbonate | Aluminumcoupling | 87.9 | 20.7 | 76.9 | 0.8 | Transparent |
| Example 8 | a | 17.8 | 54.5 | 19.0 | 0.43 | J | Polycarbonate | Zirconiumcoupling | 87.9 | 20.7 | 76.7 | 1.0 | Transparent |
| Example 9 | a | 17.8 | 54.5 | 19.0 | 0.43 | K | Polycarbonate | Silane coupling | 91.3 | 24.5 | 90.3 | 0.7 | Transparent |
| Example 10 | a | 17.8 | 54.5 | 19.0 | 0.43 | L | Polycarbonate | Silane coupling | 85.1 | 16.4 | 70.3 | 1.3 | Transparent |

### (Conclusion of the zinc oxide fine particles and the ultraviolet light shielding transparent resin molding according to examples 1 to 10 and comparative examples 1, 2)

In the ultraviolet light shielding transparent resin molding according to examples 1 to 10, in which the specific surface area of the zinc oxide fine particles is 25m²/g to 55m²/g, the average particle size is 19nm to 41nm, the half value width of the X-tray diffraction (101) peak is 0.5 or less, and the crystallite diameter is 15nm to 20nm in the zinc oxide fine particle, when the transmittance of an entire region of the visible light is set at 70% or more, it is confirmed that the transmittance of the light having the wavelength of 375nm is 30% or less, the transmittance of the light having the wavelength of 400nm is 70% or more, the haze value is 1.3% or less, and the outer appearance is transparent visually.

Also, when the zinc oxide fine particles were used, it was confirmed that the optical characteristics could be exhibited in the ultraviolet light shielding transparent resin molding, even if the resin was the PET resin or acrylic resin. Further, even when the titanium coupling agent, the aluminum coupling agent, and the zirconium coupling agent were used as the coupling agent, it was found that the optical characteristics could be exhibited in the ultraviolet light shielding transparent resin molding. Then, even when the silane coupling agent was added in a concentration range of 0.05wt% to 6wt%, it was found that the optical characteristics could be exhibited in the ultraviolet shieling transparent resin molding.

Meanwhile, in the ultraviolet light shielding transparent resin molding according to the comparative example 1, in which the specific surface area exceeds 55m²/g, the average particle size is under 19nm, the half value width of the X-ray diffraction (101) peak exceeds 0.5, and the crystallite diameter is under 1.5nm in the zinc oxide fine particle, when the transmittance of an entire region of the visible light is set at 70% or more, it is confirmed that the transmittance of the light having the wavelength of 400nm is 70% or more, the haze value is 1.3% or less, and the outer appearance is transparent visually. However, the transmittance of the light having the wavelength of 375nm exceeds 30%, thus not sufficiently providing a shielding effect of the ultraviolet light close to the visible light.

In the ultraviolet light shielding transparent resin molding according to the comparative example 2 in which although the half value width of the X-ray diffraction (101) peak was 0.5 or less, the specific surface area is under 25m²/g, the average particle size exceeds 41nm, the crystallite diameter exceeds 20nm, and the haze value exceeds 1.3%, it was confirmed that transparency was not ensured in the outer appearance visually. Then, although the transmittance of the light having the wavelength of 375nm was 30% or less, the transmittance of the light having the wavelength of 400nm was 70% or less, and therefore 70% or more visible light transmittance could not be ensured.

## Claims

1. An ultraviolet light shielding transparent resin molding with zinc oxide fine particles dispersed in a transparent resin, with each specific surface area set at 25 m²/g or more and 55 m²/g or less, average particle size set at 19 nm or more and 41 nm or less, a half value width of a (101) peak in X-ray diffraction measurement set at 0.5 or less, crystallite diameter set at 15 nm or more and 20 nm or less, and content of the zinc oxide fine particles in the ultraviolet light shielding transparent resin molding set at 0.01 wt% to 30wt%.

2. The ultraviolet light shielding transparent resin molding according to claim 1, wherein when a visible light transmittance is set at 70% or more, a transmittance of light having a wavelength of 375nm is 30% or less, a transmittance of light having a wavelength of 400 nm is 70% or more, and a haze value is 1.3% or less.

3. The ultraviolet light shielding transparent resin molding according to claim 1 or 2, wherein the zinc oxide fine particles contain one kind or more elements selected from Si, Al, Zr, and Ti.

4. The ultraviolet light shielding transparent resin molding according to any one of claims 1 to 3, wherein the transparent resin is at least one or more kind of resin selected from acrylic resin, polycarbonate resin, vinyl chloride resin, polystyrene resin, polyether sulfone resin, fluorinated resin, polyolefin resin, and polyester resin.

5. The ultraviolet light shielding transparent resin molding according to any one of claims 1 to 4, containing at least one kind or more surface treating agents selected from a silane coupling agent, a titanium coupling agent, an aluminum coupling agent, and a zirconium coupling agent, having an alkoxy group or a hydroxyl group, and an organic functional group.

6. A manufacturing method of an ultraviolet light shielding transparent resin molding, comprising the steps of:
melting and mixing a resin composition containing
zinc oxide fine particles obtained by dropping and stirring a solution of a zinc compound into an alkali solution to thereby obtain a precipitate, then subjecting the precipitate to decantation by pure water, and cleaning the precipitate until conductivity of a cleaning liquid after cleaning becomes 1 mS/cm or less, and thereafter applying wet treatment with alcohol to the precipitate after cleaning and drying thereafter to thereby obtain a zinc oxide precursor, and applying heat treatment to this zinc oxide precursor at 350°C or more and 500°C or less in an atmosphere selected from any one of the atmospheric air, inert gas, and mixed gas of the inert gas and reductive gas to thereby obtain zinc oxide fine particles, with each specific surface area set at 25 m²/g or more and 55 m²/g or less, average particle size set at 19 nm or more and 41 nm or less, a half value width of a (101) peak in an X-ray diffraction measurement set at 0.5 or less, and a crystallite diameter set at 15 nm or more and 20 nm or less,
at least one kind or more surface treating agents selected from a silane coupling agent, a titanium coupling agent, an aluminum coupling agent, and a zirconium coupling agent, having an alkoxy group or a hydroxyl group and an organic functional group, and
a transparent resin,
so that content of the zinc oxide fine particles in the ultraviolet light shielding transparent resin molding is 0.01 wt% to 30wt%; and
thereafter molding this resin composition into a prescribed shape after melting and mixing the resin composition.

7. The manufacturing method of the ultraviolet light shielding transparent resin molding according to claim 6, **characterized by** applying immersion treatment to the zinc oxide precursor by using an alcohol solution containing one kind or more elements selected from Si, Al, Zr, and Ti, and drying thereafter to thereby obtain the zinc oxide precursor containing at least one kind of element selected from Si, Al, Zr, and Ti, before applying the heat treatment to the zinc oxide precursor in the atmosphere.

8. The manufacturing method of the ultraviolet light shielding transparent resin molding according to claim 6 or 7,
wherein the resin composition is obtained by melting and mixing the transparent resin and a dispersion liquid obtained by pulverizing and dispersing the zinc oxide fine particles, the surface treating agent, and an organic solvent by a medium stirring mill.

9. The manufacturing method of the ultraviolet light shielding transparent resin molding according to claim 6 or 7,
wherein the resin composition is obtained by melting and mixing the transparent resin and dry powders obtained by removing an organic solvent from a dispersion liquid obtained by pulverizing and dispersing the zinc oxide fine particles, the surface treating agent, and the organic solvent by a medium stirring mill.

## Patentansprüche

1. Formteil aus transparentem Harz zur Abschirmung von ultraviolettem Licht mit feinen Zinkoxidpartikeln, die in einem transparenten Harz dispergiert sind, wobei jede spezifische Oberfläche auf 25 m²/g oder mehr und 55 m²/g oder weniger eingestellt ist, die durchschnittliche Partikelgröße auf 19nm oder mehr und 41 nm oder weniger eingestellt ist, eine Halbwertsbreite eines (101)-Peaks bei einer Röntgenbeugungsmessung auf 0,5 oder weniger eingestellt ist, ein Kristallitdurchmesser auf 15 nm oder mehr und 20 nm oder weniger eingestellt ist, und der Gehalt an feinen Zinkoxidpartikeln in dem Formteil aus transparentem Harz zur Abschirmung von ultraviolettem Licht auf 0,01 Gewichtsprozent bis 30 Gewichtsprozent eingestellt ist.

2. Formteil aus transparentem Harz zur Abschirmung von ultraviolettem Licht nach Anspruch 1, wobei der Transmissionsgrad für sichtbares Licht auf 70% oder mehr eingestellt ist, ein Transmissionsgrad von Licht mit einer Wellenlänge von 375 nm 30% oder weniger ist, ein Transmissiongrad von Licht mit einer Wellenlänge von 400 nm 70% oder mehr ist, und ein Haze-Wert 1,3% oder weniger ist.

3. Formteil aus transparentem Harz zur Abschirmung von ultraviolettem Licht nach Anspruch 1 oder 2, wobei die feinen Zinkoxidpartikel eine Art oder mehrere Elemente ausgewählt aus Si, Al, Zr und Ti enthalten.

4. Formteil aus transparentem Harz zur Abschirmung von ultraviolettem Licht nach einem der Ansprüche 1 bis 3, wobei das transparente Harz wenigstens eine Harzart oder mehrere ist, ausgewählt aus Akrylharz, Polycarbonatharz, Vinylchloridharz, Polystyrolharz, Polyethersulfonharz, Fluorharz, Polyolefinharz und Polyesterharz.

5. Formteil aus transparentem Harz zur Abschirmung von ultraviolettem Licht nach einem der Ansprüche 1 bis 4, umfassend wenigstens eine oder mehrere Arten von Oberflächenbehandlungsagenzien, ausgewählt aus einem Silankopplungsagens, einem Titankopplungsagens, einem Aluminiumkopplungsagens und einem Zirkonkopplungsagens, mit einer AlkoxyGruppe oder einer Hydroxyl-Gruppe sowie einer organischen funktionalen Gruppe.

6. Verfahren zur Herstellung eines Formteils aus transparentem Harz zur Abschirmung von ultraviolettem Licht, umfassend die Schritte:
Schmelzen und Mischen einer Harzverbindung, umfassend
feine Zinkoxidpartikel, die erhalten sind durch Eintropfen und Rühren einer Lösung einer Zinkverbindung in eine Alkalilösung, um hierdurch ein Fällungsprodukt zu erhalten, dann Durchführen einer Reinwasser-Abschöpfung bei dem Fällungsprodukt und Reinigen des Fällungsprodukts, bis die Leitfähigkeit einer Reinigungsflüssigkeit nach dem Reinigen 1 mS/cm oder weniger wird, und danach Durchführen einer Naßbehandlung mit Alkohol an dem Fällungsprodukt nach dem Reinigen und anschließendes Trocknen, um hierdurch einen Zinkoxid-Precursor zu erhalten, und Durchführen einer Wärmebehandlung an diesem Zinkoxid-Precursor bei 350°C oder mehr und 500°C oder weniger in einer Atmosphäre, ausgewählt aus Umgebungsluft, Inertgas und Mischgas des Inertgases und eines Reduktionsgases, um hierdurch feine Zinkoxidpartikel zu erhalten, wobei jede spezifische Oberfläche auf 25 m²/g oder mehr und 55 m²/g oder weniger eingestellt ist, die durchschnittliche Partikelgröße auf 19 nm oder mehr und 41 nm oder weniger eingestellt ist, eine Halbwertsbreite eines (101)-Peaks bei einer Röntgenbeugungsmessung auf 0,5 oder weniger eingestellt ist, und ein Kristallitdurchmesser auf 15 nm oder mehr und 20 nm oder weniger eingestellt ist,
wenigstens eine Art oder mehr von Oberflächenbehandlungsagenzien, ausgewählt aus einem Silankopplungsagens, einem Titankopplungsagens, einem Aluminiumkopplungsagens und einem Zirkonkopplungsagens, mit einer AlkoxyGruppe oder einer Hydroxyl-Gruppe sowie einer organischen funktionalen Gruppe, und
ein transparentes Harz,
derart, dass der Gehalt an feinen Zinkoxid-Partikeln in dem Formteil aus transparentem Harz zur Abschirmung von ultraviolettem Licht 0,01 Gewichtsprozent bis 30 Gewichtsprozent ist; und
danach Formen dieser Harzverbindung in eine vorbestimmte Gestalt nach Schmelzen und Mischen der Harzverbindung.

7. Verfahren zur Herstellung eines Formteils aus transparentem Harz zur Abschirmung von ultraviolettem Licht nach Anspruch 6, **gekennzeichnet durch** das Anwenden einer Eintauchbehandlung auf den Zinkoxid-Precursor unter Verwendung einer Alkohollösung, die eine Art oder mehrere Elemente ausgewählt aus Si, Al, Zr und Ti enthält, und anschließendes Trocknen, um hierdurch den Zinkoxid-Precursor zu erhalten, der wenigstens eine Art von Element ausgewählt aus Si, Al, Zr und Ti enthält, bevor die Wärmebehandlung an dem Zinkoxid-Precursor in der Atmosphäre durchgeführt wird.

8. Verfahren zur Herstellung eines Formteils aus transparentem Harz zur Abschirmung von ultraviolettem Licht nach Anspruch 6 oder 7, wobei die Harzverbindung erhalten wird durch Schmelzen und Mischen des transparenten Harzes und einer Dispersionsflüssigkeit, erhalten durch Pulverisieren und Dispergieren der feinen Zinkoxid-Partikel, des Oberflächenbehandlungsagens und eines organischen Lösungsmittels durch eine Mediumrührmühle.

9. Verfahren zur Herstellung eines Formteils aus transparentem Harz zur Abschirmung von ultraviolettem Licht nach Anspruch 6 oder 7,
wobei die Harzverbindung erhalten wird durch Schmelzen und Mischen des transparenten Harzes und eines Trockenpulvers, erhalten durch Entfernen eines organischen Lösungsmittels aus einer Dispersionsflüssigkeit, erhalten durch Pulverisieren und Dispergieren der feinen Zinkoxid-Partikel, des Oberflächenbehandlungsagens und des organischen Lösungsmittels durch eine Mediumrührmühle.

## Revendications

1. Moulage en résine transparente à protection contre la lumière ultraviolette ayant de fines particules d'oxyde de zinc dispersées dans une résine transparente, où chaque surface spécifique est supérieure ou égale à 25 m²/g et inférieure ou égale à 55 m²/g, la taille moyenne de particule est supérieure ou égale à 19 nm et inférieure ou égale à 41 nm, une largeur à mi-hauteur d'un pic (101) de mesure de diffraction X est inférieure ou égale à 0,5, un diamètre de cristallite est supérieur ou égal à 15 nm et inférieur ou égal à 20 nm et la teneur en fines particules d'oxyde de zinc dans le moulage en résine transparente à protection contre la lumière ultraviolette est de 0,01 % en poids à 30 % en poids.

2. Moulage en résine transparente à protection contre la lumière ultraviolette selon la revendication 1, dans lequel quand une transmittance de lumière visible est ajustée à 70 % ou plus, une transmittance de lumière ayant une longueur d'onde de 375 nm est inférieure ou égale à 30 %, une transmittance de lumière ayant une longueur d'onde de 400 nm est supérieure ou égale à 70 % et une valeur de trouble est inférieure ou égale à 1,3 %.

3. Moulage en résine transparente à protection contre la lumière ultraviolette selon la revendication 1 ou 2, dans lequel les fines particules d'oxyde de zinc contiennent un ou plusieurs éléments choisis parmi Si, Al, Zr et Ti.

4. Moulage en résine transparente à protection contre la lumière ultraviolette selon l'une quelconque des revendications 1 à 3, dans lequel la résine transparente est au moins un ou plusieurs types de résine choisie parmi une résine acrylique, une résine de polycarbonate, une résine de chlorure de vinyle, une résine de polystyrène, une résine de polyéther sulfone, une résine fluorée, une résine de polyoléfine et une résine de polyester.

5. Moulage en résine transparente à protection contre la lumière ultraviolette selon l'une quelconque des revendications 1 à 4, contenant au moins un ou plusieurs agents de traitement de surface choisis parmi un agent de couplage à base de silane, un agent de couplage à base de titane, un agent de couplage à base d'aluminium et un agent de couplage à base de zirconium, contenant un groupe alcoxy ou un groupe hydroxyle, et un groupe fonctionnel organique.

6. Procédé de fabrication d'un moulage en résine transparente à protection contre la lumière ultraviolette, comprenant les étapes suivantes :
la fusion et le mélange d'une composition de résines contenant
de fines particules d'oxyde de zinc obtenues en versant goutte-à-goutte une solution d'un composé de zinc dans une solution alcaline sous agitation pour ainsi obtenir un précipité, en soumettant le précipité à une décantation par eau pure et en nettoyant le précipité jusqu'à ce que la conductivité d'un liquide de nettoyage après le nettoyage soit inférieure ou égale à 1 ms/cm, en soumettant ensuite le précipité à un traitement par voie humide avec un alcool après le nettoyage et à un séchage pour ainsi obtenir un précurseur d'oxyde de zinc et en soumettant ce précurseur d'oxyde de zinc à un traitement thermique à une température supérieure ou égale à 350 °C et inférieure ou égale à 500 °C sous une atmosphère choisie parmi l'air atmosphérique, un gaz inerte et un mélange gazeux contenant le gaz inerte et un gaz réducteur pour ainsi obtenir de fines particules d'oxyde de zinc, où chaque surface spécifique est supérieure ou égale à 25 m²/g et inférieure ou égale à 55 m²/g, la taille moyenne de particule est supérieure ou égale à 19 nm et inférieure ou égale à 41 nm, une largeur à mi-hauteur d'un pic (101) de mesure de diffraction X est inférieure ou égale à 0,5 et un diamètre de cristallite est supérieur ou égal à 15 nm et inférieur ou égal à 20 nm,
au moins un ou plusieurs agents de traitement de surface choisis parmi un agent de couplage à base de silane, un agent de couplage à base de titane, un agent de couplage à base d'aluminium et un agent de couplage à base de zirconium, contenant un groupe alcoxy ou un groupe hydroxyle et un groupe fonctionnel organique, et
une résine transparente,
de façon que la teneur en fines particules d'oxyde de zinc dans le moulage en résine transparente à protection contre la lumière ultraviolette soit de 0,01 % en poids à 30 % en poids ; puis
le moulage de cette composition de résine en une forme prédéterminée après la fusion et le mélange de la composition de résine.

7. Procédé de fabrication du moulage en résine transparente à protection contre la lumière ultraviolette selon la revendication 6, **caractérisé en ce que** le précurseur d'oxyde de zinc est soumis à un traitement par immersion en utilisant une solution d'alcool contenant un ou plusieurs éléments choisis parmi Si, Al, Zr et Ti, puis à un séchage pour ainsi obtenir un précurseur d'oxyde de zinc contenant au moins un type d'élément choisi parmi Si, Al, Zr et Ti avant que le précurseur d'oxyde de zinc soit soumis au traitement thermique sous l'atmosphère.

8. Procédé de fabrication du moulage en résine transparente à protection contre la lumière ultraviolette selon la revendication 6 ou 7,
dans lequel la composition de résine est obtenue par la fusion et le mélange de la résine transparente et d'un liquide de dispersion obtenu en pulvérisant et en dispersant les fines particules d'oxyde de zinc, l'agent de traitement de surface et le solvant organique au moyen d'un malaxeur-mélangeur.

9. Procédé de fabrication du moulage en résine transparente à protection contre la lumière ultraviolette selon la revendication 6 ou 7,
dans lequel la composition de résine est obtenue par la fusion et le mélange de la résine transparente et de poudres sèches obtenues en éliminant un solvant organique d'un liquide de dispersion obtenu en pulvérisant et en dispersant les fines particules d'oxyde de zinc, l'agent de traitement de surface et le solvant organique au moyen d'un malaxeur-mélangeur.
